# EUROPEAN PATENT SPECIFICATION

(11) **EP 3 270 580 B1**
(45) Date of publication and mention of the grant of the patent: **01.09.2021**
(21) Application number: 17178532.2
(22) Date of filing: 28.06.2017
(51) Int. Cl.: H04N 1/107

(54) **IMAGING SCANNER WITH POSITIONING AND DISPLAY**
BILDGEBUNGSSCANNER MIT POSITIONIERUNG UND ANZEIGE
SCANNER D'IMAGERIE AVEC POSITIONNEMENT ET AFFICHAGE

(30) Priority: 15.07.2016 CN 201610557275; 14.06.2017 US 201715622620
(43) Date of publication of application: 17.01.2018
(73) Proprietor: Hand Held Products, Inc., Fort Mill, SC 29707 (US)
(72) Inventor: WANG, Hongdong, Morris Plains, NJ 07950 (US); YIN, Jun, Morris Plains, NJ 07950 (US); GU, Yu, Morris Plains, NJ 07950 (US); OUYANG, Yunxin, Morris Plains, NJ 07950 (US); TENG, Zhipeng, Morris Plains, NJ 07950 (US)
(74) Representative: Haseltine Lake Kempner LLP

(56) References cited:
- WO-A2-02/080106
- US-A1- 2006 065 714
- US-A1- 2014 353 377
- US-A1- 2015 154 801
- US-B1- 8 139 049

## Description

### FIELD OF THE INVENTION

The present invention relates to imaging scanners, and in particular to imaging scanners which provide feedback to users of the imaging scanner.

### BACKGROUND

Generally speaking when a user approaches an imaging scanner with a portable electronic device to scan a coupon or a barcode on the portable electronic device, the user cannot be sure that the portable electronic device is properly positioned under the imaging scanner to get the best scan.

Additionally, usually there is no immediate feedback on the decoding of the presented image or barcode at imaging scanner.

There have been other solutions in the art to solve some of these problems. For example, US Patent No. 8,777,109 discloses a customer facing imaging scanner. The scanner includes an imaging unit in a C-shaped housing unit. The mobile screen to be imaged is placed on the lower surface of the housing facing upwards. The customer can view the mobile screen placed on the lower surface and make adjustments to the placement for a successful imaging. The upper portion of the scanner includes an electronic display to display advertisements or other information to the customers during the transaction. However, placing the mobile screen correctly on the lower surface for scanning is done by eye at an angle to the lower surface. Additionally, advertisements and other information may be displayed on a separate portion of the scanner (other than the lower surface), which may not be viewed simultaneously as with positioning the mobile screen.

US Patent No. 5,266,788 provides a laser barcode scanner with a transparent support region. The customer can observe and confirm the barcode that is being scanned by viewing the barcode through the transparent support. A hologram may be reflected onto the transparent support to show information about the barcode scan. However, the customer is not holding the item to be scanned. For example, the mobile device that has the barcode to be scanned is held by the operator of the barcode scanner and not the customer. Additionally, the reflection-type hologram may be a complicated scheme.

US Patent publication US2014353377 discloses an electronic device with a transparent display unit which can be any portable electronic device as in a smartphone or a barcode reader. The user can view the barcode to be displayed and scan the barcode in real time by viewing the barcode through the heads-up display on the electronic device. However, this device is limited to customer use as the scanner is in the customer's hands. Additionally, depending on the location of the barcodes with respect to the customer, the positioning of the barcode in the heads-up display may take several attempts for a successful scan. Additionally, the customer may not be able to isolate one barcode on the display if there are a number of barcodes close together.

Therefore, a need exists for an imaging scanner of simple operation for which an image to be scanned from a portable electronic device, such as a smartphone, can be accurately placed for successful scans by a presenter of the image, and for which the display of immediate feedback and/or other information is in the same field of view where the presenter is placing the image to be scanned.

### SUMMARY

The present invention is defined by the appended claims.

Accordingly, in one aspect, the present invention embraces an imaging scanner satisfying the hereinbefore described advantages.

In an exemplary embodiment, the imaging scanner is comprised of a housing having a lower portion, an upper portion, and an end portion. The upper portion extends at a declining angle from the lower portion. The end portion extends at a declining angle from the upper portion. The imaging scanner is also comprised of a mirror. The mirror is positioned at a top surface inside the upper portion of the housing. The imaging scanner also includes a camera in the lower portion of the housing, a transparent window for scanning positioned on a lower end of the end portion, a transparent window for viewing on a top surface of the end portion and positioned above the transparent window for scanning, such that anything below the transparent window for scanning is visible in the transparent window for viewing. The transparent window for viewing has an electronic display embedded therein. The imaging scanner is additionally comprised of an image decoder. The image decoder is communicatively linked to the camera and to the electronic display. The mirror is positioned at the top surface such that incident light on the mirror from the transparent scanning window will be reflected within the camera's field of view. The camera is configured to scan images presented at the transparent window for scanning by a user and to send the scanned images to the image decoder. The image decoder is configured to decode the scanned images and to send the decoded image information to the electronic display. The electronic display is configured to display the decoded image information on the transparent window for viewing.

In another exemplary embodiment, the imaging scanner further comprises a processor communicatively linked to the camera, the image decoder, and the electronic display. The processor is configured to implement the functions of the camera, and the image decoder, and to send display instructions to the electronic display.

In another exemplary embodiment of the imaging scanner, the display instructions include instructions to display decoded image information, instructions to display greetings, and instructions to display guidelines to a user for presenting an image to be scanned below the transparent scanning window.

In yet another exemplary embodiment of the imaging scanner, the electronic display is a TOLED (transparent organic light-emitting diode.)

In another exemplary embodiment of the imaging scanner, the TOLED has an outer surface encased in transparent plastic.

In another exemplary embodiment of the imaging scanner, the communicative link between the image decoder and the electronic display is wireless.

In another exemplary embodiment of the imaging scanner, the communicative link between the image decoder and the electronic display is a hardwire link.

In another exemplary embodiment of the imaging scanner, the image decoder is positioned within the lower portion of the housing.

In another exemplary embodiment of the imaging scanner, the image decoder is positioned external to the image scanner.

In another exemplary embodiment of the imaging scanner, the image presented at the transparent scanning window is a barcode. The image decoder is a barcode decoder.

In another exemplary embodiment of the imaging scanner, a barcode is presented to the transparent window for scanning on an electronic device.

In another exemplary embodiment of the imaging scanner, the electronic display is configured to display a company logo on the electronic display.

In another aspect, the present invention embraces a method of scanning images and presenting decoded image information to a user using an image scanner. In the method of the present invention, the image scanner is comprised of a housing with an optical system within the housing. The optical system is comprised of a camera, a mirror, a transparent scanning window, and a transparent viewing window. The mirror is positioned such that incident light on the mirror from the transparent scanning window is in the camera's field of view. The transparent viewing window is a TOLED and includes an electronic display, being positioned on the housing above the transparent scanning window such that images presented in the transparent scanning window can be seen by the presenter in the transparent viewing window.

In an exemplary embodiment, the method comprises the steps of: placing an image to be scanned under the transparent scanning window; determining the image is placed correctly under the transparent scanning window by viewing the image through the transparent viewing window; scanning the reflection of the image in the mirror with the camera; decoding the scanned image with an image decoder; sending the decoded image information to the electronic display; and displaying the decoded image information on the electronic display.

In another exemplary embodiment, the method further comprises the step of displaying a greeting on the electronic display before the placing step.

In another exemplary embodiment of the method, the step of displaying a greeting includes instructing a presenter of the image to be scanned where to place the image to be scanned.

In another exemplary embodiment, the method further comprises the step of instructing a presenter of the image to be scanned where to place the image to be scanned before the placing step.

In another exemplary embodiment of the method, the sending step is accomplished via a processor electronically linked to the image decoder and the electronic display.

In another exemplary embodiment, the method further comprises the step of displaying a company logo on the electronic display.

In another exemplary embodiment of the method, the step of displaying a company logo is concurrent with the step of displaying the decoded image information on the electronic display.

In another exemplary embodiment, the method further comprises the step of displaying a company logo on the electronic display, the step of displaying a company logo being concurrent with the step of displaying a greeting on the electronic display.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 schematically depicts a cross-sectional perspective view of the imaging scanner in accordance with an exemplary embodiment of the present invention.
Figure 2 schematically depicts another perspective view of the imaging scanner in accordance with an exemplary embodiment of the present invention.
Figure 3 schematically depicts the transparent viewing window with a series of displays on the electronic display during a transaction in accordance with the present invention.
Figure 4 schematically depicts in a flowchart, a method of scanning images and presenting decoded image information to a user using an image scanner in accordance with an exemplary embodiment of the present invention.

### DETAILED DESCRIPTION

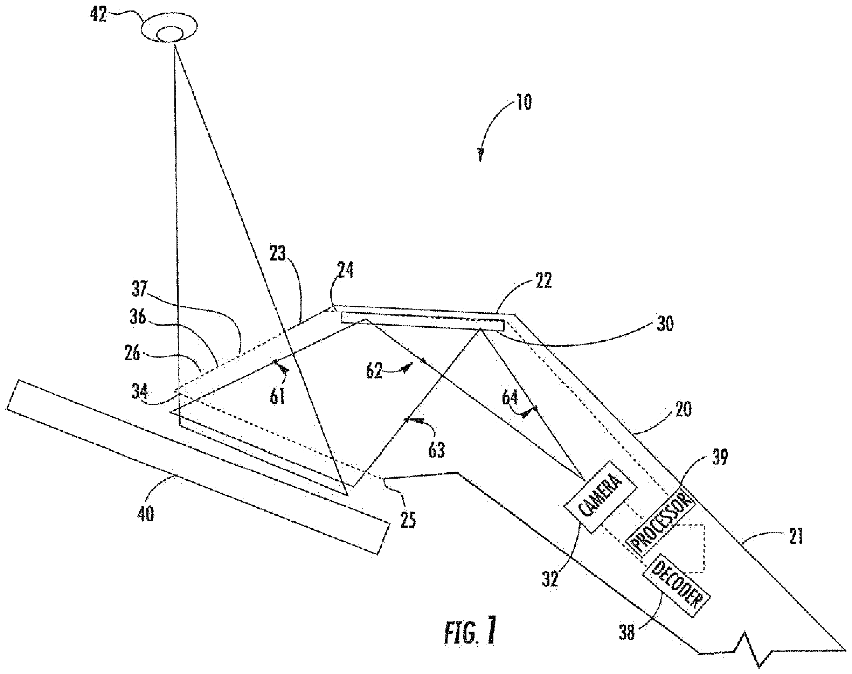

The present invention embraces an imaging scanner. Figure 1 shows a cross-section of the imaging scanner (10) so that the interior portion of the imaging scanner (10) can be understood. The present application may also refer to the imaging scanner or image scanner as a device.

In an exemplary embodiment, as is depicted in Figure 1, the imaging scanner (10) has a housing (20), which is comprised of a lower portion (21), an upper portion (22), and an end portion (23). As can be seen in the present Figure, the imaging scanner (10) has a generally goose-neck shape. The upper portion (22) extends generally at a declining angle from the lower portion (21). The end portion (23) extends generally at a declining angle from the upper portion (22).

The housing (20) includes a mirror (30). The mirror is positioned at a top surface (24) inside the upper portion (22) of the housing (20).

The imaging scanner (10) also includes a camera (32) positioned in the lower portion (21) of the housing (20).

A transparent window for scanning (34) is positioned on a lower end (25) of the end portion (23) of the housing (20).

A transparent window for viewing (36) is positioned on a top surface (26) of the end portion (23) and positioned above the transparent window for scanning (34), such that anything below the transparent window for scanning (34) is visible in the transparent window for viewing (36). Shown in the Figure, a cellphone (40) or another handheld electronic device is presented below the transparent window for scanning (34). The presenter (42) of the cellphone (40) is partially shown looking through the transparent window for viewing (36) and can see that the cellphone (40) is centered correctly under the transparent window for scanning (34).

The transparent window for viewing (36) is provided with an electronic display (37) embedded therein.

The imaging scanner is further includes an image decoder (38). The image decoder (38) is communicatively linked to the camera (32) and to the electronic display (37) of the transparent window for viewing (36). The communicative links are shown in the Figure by dotted lines within the housing between components.

The mirror (30) is positioned at the top surface (24) such that incident light on the mirror (30) from the transparent scanning window (34) will be reflected within the camera's (32) field of view. This is shown in the Figure by ray lines (61, 62, 63, and 64).

The camera (32) being configured to scan images, as on a cellphone (40) presented at the transparent window for scanning (34) by a user and to send the scanned images to the image decoder (38). The image decoder (38) being configured to decode the scanned images and to send the decoded image information to the electronic display on the transparent window for viewing (36). The electronic display (37) is configured to display the decoded image information on the transparent window for viewing (36).

In another exemplary embodiment, still referring to the present figure, the image scanner (10) further includes a processor (39). The processor (39) is communicatively linked to the camera (32), the image decoder (38), and the electronic display (7). Further, the processor (39) being configured to implement the functions of the camera (32), the image decoder (38), and to send display instructions to the electronic display (37).

In another exemplary embodiment, the electronic display (37) is a TOLED. Additionally, the outer surface of the TOLED may be encased in transparent plastic (not shown).

In an exemplary embodiment, the image decoder (38) is positioned within the lower portion (21) of the housing (20) as shown in the Figure 1. Alternatively, the image decoder (38) may be positioned external to the image scanner (30) (this configuration not shown).

The links between the processor (37), the camera (32), the image decoder (38), and the electronic display (37), may be wireless, hardwire, or combinations thereof. In the Figure, the links are shown as dotted lines between these components.

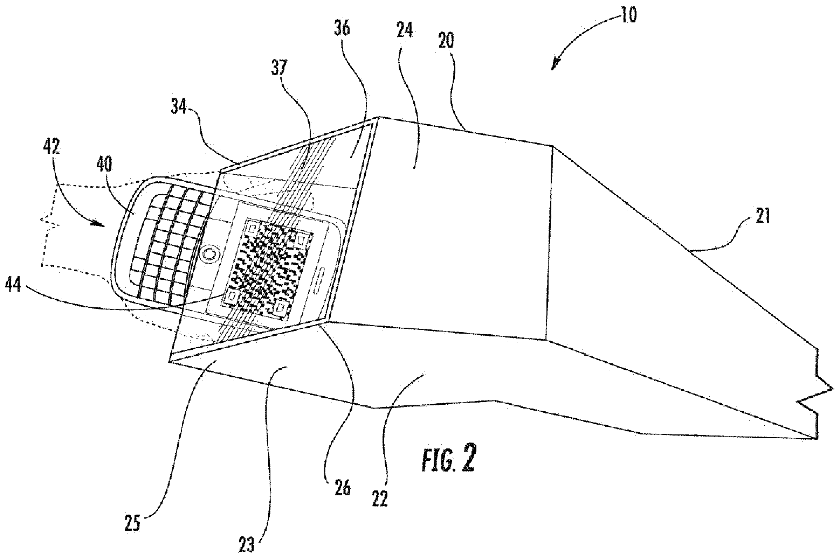

Referring now to Figure 2, the image scanner (10) is shown from above the transparent viewing window (36). The housing (20) and lower portion (21), upper portion (22), and end portion (23) are designated as in the previous Figure, as are the top surface (24) of the upper portion (22), the top surface (26) of the end portion (23), and the lower end (25) of the end portion (23). From this perspective, a cellphone (40) is being presented under the transparent scanning window (34) by a user (42). The cellphone (40) displays a barcode (44). The TOLED electronic display (37) is transparent, not displaying any information, and thus, the barcode (44) can be seen through the transparent viewing window (36).

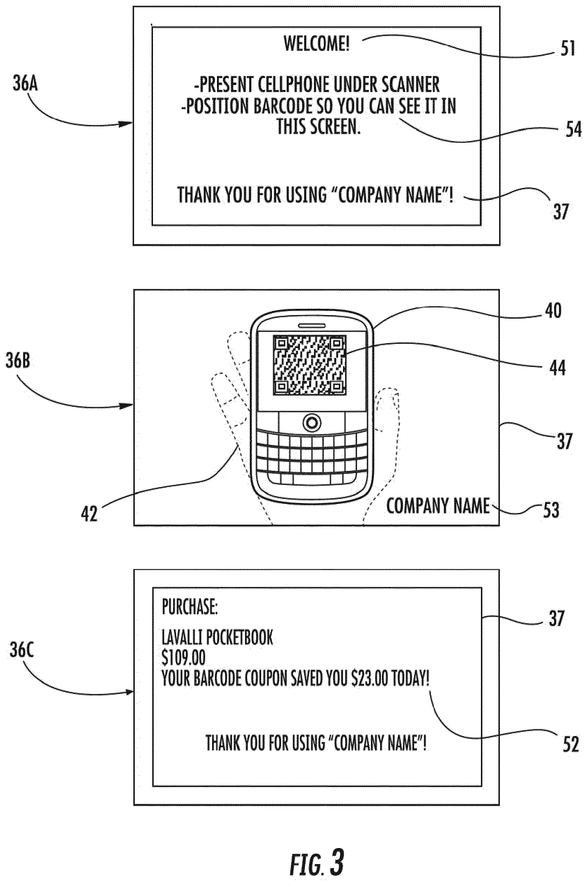

Referring now to Figure 3, an example of what the transparent viewing window (36) and the TOLED electronic display may look like during a transaction is depicted.

The transparent viewing window (36A) initially has the TOLED electronic display (37) displaying a welcome message (51) which includes instructions (54) to a user (not shown). Next, the transparent viewing window (36B) no longer carries a message, but a user (42) can view his/her cellphone (40) and barcode (44) displayed thereon under the transparent scanning window through the transparent viewing window (36B). Optionally, a company logo (53) is displayed on the TOLED electronic display (37) simultaneously with the viewing of the cellphone (40) and barcode (44) through the transparent viewing window (36B). After the barcode (44) is scanned by the camera (not shown in this Figure), the transparent viewing window (36C) has the TOLED electronic display (37) displaying information (52) about the barcode (44) and the transaction. In the present Figure, this is shown as information about a purchase using a barcode coupon.

The present invention further embraces a method of scanning and presenting decoded image information to a user using an image scanner. In an exemplary embodiment, the image scanner is as hereinbefore described in conjunction with Figures 1-3. That is, the image scanner may be comprised of a housing with an optical system within the housing. The optical system is comprised of a camera, a mirror, a transparent scanning window, and a transparent viewing window. The mirror is positioned such that incident light on the mirror from the transparent scanning window is in the camera's field of view. The transparent viewing window has an electronic display, preferably a TOLED. The transparent viewing window is positioned on the housing above the transparent scanning window such that images presented in the transparent scanning window can be seen by the presenter in the transparent viewing window.

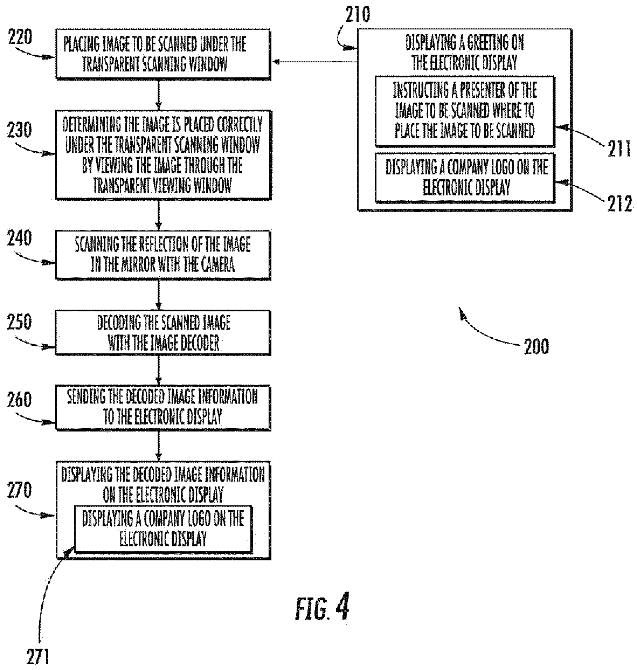

In an exemplary embodiment of the method (200), referring to Figure 4, is comprised of the steps of: (220) placing an image to be scanned under the transparent scanning window; (230) determining the image is placed correctly under the transparent scanning window by viewing the image through the transparent viewing window; (240) scanning the reflection of the image in the mirror with the camera; (250) decoding the scanned image with the image decoder; (260) sending the decoded image information to the electronic display; and (270) displaying the decoded image information on the electronic display.

In another exemplary embodiment, the method (200) may further comprise the step of (210) displaying a greeting on the electronic display before the placing step (220). Thus, the greeting may be displayed on the TOLED when a presenter of the image approaches the imaging scanner.

In another exemplary embodiment of the method (200), the step of (210) displaying a greeting includes the step of (211) instructing a presenter of the image to be scanned where to place the image to be scanned.

Alternatively, in another exemplary embodiment of the method (200), the step of (211) instructing a presenter of the image to be scanned where to place the image to be scanned before the placing step may be taken in the absence of the optional step (210) of displaying a greeting.

Alternatively, or additionally, in another exemplary embodiment, the method (200) may further include the step of (212) displaying a company logo on the TOLED electronic display.

The step of (212) displaying the company logo on the TOLED electronic display, in another exemplary embodiment, may accompany or be concurrent with the step of (210) displaying a greeting on the electronic display and/or with the step (211) of instructing a presenter of the image to be scanned where to place the image to be scanned.

In another exemplary embodiment of the method (200), the step of (212) displaying the company logo on the TOLED electronic display may occur during any or all of the subsequent steps (220 - 260) of the method (200).

In another exemplary embodiment, the method (200) further comprises the step (271) of displaying the company logo on the electronic display concurrently with the step of (270) displaying the decoded image information on the electronic display.

In another exemplary embodiment of the method (200), the sending step (260) is accomplished via a processor electronically linked to the image decoder and the electronic display as described hereinbefore in connection with Figures 1-3).

In the specification and/or figures, typical embodiments of the invention have been disclosed.

## Claims

1. A device, comprising:
a housing having a lower portion, an upper portion, and an end portion;
a camera;
a transparent window for scanning;
a transparent window for viewing, the transparent window for viewing having an electronic display embedded therein;
an image decoder, the image decoder being communicatively linked to the camera and to the electronic display;
the camera being configured to scan images presented at the transparent window for scanning by a user and to send the scanned images to the image decoder;
the image decoder being configured to decode the scanned images and to send the decoded image information to the electronic display; and
the electronic display being configured to display the decoded image information on the transparent window for viewing;
**characterized by**:
the housing having the upper portion extending at a declining angle from the lower portion and the end portion extending at a declining angle from the upper portion;
the transparent window for scanning being positioned on a lower end of the end portion of the housing;
the camera being positioned in the lower portion of the housing;
the transparent window for viewing being positioned on a top surface of the end portion of the housing and positioned above the transparent window for scanning, such that at least a portion of the area below the transparent window for scanning is visible in the transparent window for viewing; and
a mirror being positioned at a top surface inside the upper portion of the housing such that light incident on the mirror from the transparent scanning window will be reflected within the camera's field of view.

2. The device of claim 1, further comprising a processor communicatively linked to the camera, the image decoder, and the electronic display; the processor being configured to implement the functions of the camera, the image decoder, and to send display instructions to the electronic display.

3. The device of claim 2, wherein the display instructions include instructions to display decoded image information, instructions to display greetings, and instructions to display guidelines to a user for presenting an image to be scanned below the transparent scanning window.

4. The device of claim 1, wherein the electronic display is a TOLED (transparent organic light-emitting diode.)

5. The device of claim 4, wherein the TOLED has an outer surface encased in transparent plastic.

6. The device of claim 1, wherein the communicative link between the image decoder and the electronic display is wireless.

7. The device of claim 1, wherein the communicative link between the image decoder and the electronic display is a hardwire link.

8. The device of claim 1, wherein the image decoder is positioned within the lower portion of the housing.

9. The device of claim 1, wherein the image decoder is positioned external to the image device.

10. The device of claim 1, wherein the image presented at the transparent scanning window is a barcode; and wherein the image decoder is a barcode decoder.

11. The device of claim 9, wherein a barcode is presented to the transparent window for scanning on an electronic device.

12. The device of claim 1, wherein the electronic display is configured to display a company logo on the electronic display.

13. A method, comprising:
placing an image to be scanned under a transparent scanning window of a device, the device comprising a housing Z , the housing having a lower portion, an upper portion, and an end portion, the upper portion extending at a declining angle from the lower portion, the end portion extending at a declining angle from the upper portion, and an optical system, the optical system comprising a camera in the lower portion of the housing, a mirror positioned at a top surface inside the upper portion of the housing, a transparent scanning window positioned on a lower end of the end portion, and a transparent viewing window on a top surface of the end portion, wherein the mirror is positioned such that incident light on the mirror from the transparent scanning window is in the camera's field of view, and wherein the transparent viewing window has a electronic display and is positioned on the housing above the transparent scanning window such that images presented in the transparent scanning window can be seen by a presenter in the transparent viewing window;
determining that the image is placed correctly under the transparent scanning window by viewing the image through the transparent viewing window;
scanning the reflection of the image in the mirror with the camera;
decoding the scanned image with an image decoder communicatively linked to the camera and to the electronic display;
sending the decoded image information to the electronic display; and
displaying the decoded image information on the electronic display.

14. The method of claim 13, further comprising the step of displaying a greeting on the electronic display before the placing step.

15. The method of claim 14, wherein the step of displaying a greeting includes instructing a presenter of the image to be scanned where to place the image to be scanned.

## Patentansprüche

1. Vorrichtung, umfassend:
ein Gehäuse mit einem unteren Abschnitt, einem oberen Abschnitt und einem Endabschnitt;
eine Kamera;
ein transparentes Fenster zum Scannen;
ein transparentes Fenster zum Betrachten, wobei das transparente Fenster zum Betrachten eine darin eingebettete elektronische Anzeige aufweist;
einen Bilddecoder, wobei der Bilddecoder kommunikativ mit der Kamera und der elektronischen Anzeige verbunden ist;
wobei die Kamera konfiguriert ist, um Bilder zu scannen, die in dem transparenten Fenster zum Scannen durch einen Benutzer präsentiert werden, und um die gescannten Bilder an den Bilddecoder zu senden;
wobei der Bilddecoder konfiguriert ist, um die gescannten Bilder zu decodieren und die decodierten Bildinformationen an die elektronische Anzeige zu senden; und
wobei die elektronische Anzeige konfiguriert ist, um die decodierten Bildinformationen auf dem transparenten Fenster zum Betrachten anzuzeigen;
**dadurch gekennzeichnet, dass**:
sich bei dem Gehäuse der obere Abschnitt in einem abnehmenden Winkel vom unteren Abschnitt erstreckt und sich der Endabschnitt in einem abnehmenden Winkel vom oberen Abschnitt erstreckt;
das transparente Fenster zum Scannen an einem unteren Ende des Endabschnitts des Gehäuses positioniert ist;
die Kamera im unteren Teil des Gehäuses positioniert ist;
das transparente Fenster zum Betrachten auf einer Oberseite des Endabschnitts des Gehäuses und über dem transparenten Fenster zum Scannen positioniert ist, sodass mindestens ein Abschnitt des Bereichs unter dem transparenten Fenster zum Scannen im transparenten Fenster zum Betrachten sichtbar ist; und
ein Spiegel an einer oberen Oberfläche im oberen Abschnitt des Gehäuses positioniert ist, sodass Licht, das vom transparenten Scanfenster auf den Spiegel fällt, innerhalb des Sichtfelds der Kamera reflektiert wird.

2. Vorrichtung nach Anspruch 1, ferner umfassend einen Prozessor, der kommunikativ mit der Kamera, dem Bilddecoder und der elektronischen Anzeige verbunden ist; wobei der Prozessor konfiguriert ist, um die Funktionen der Kamera und des Bilddecoder zu implementieren und Anzeigeanweisungen an die elektronische Anzeige zu senden.

3. Vorrichtung nach Anspruch 2, wobei die Anzeigeanweisungen Anweisungen zum Anzeigen decodierter Bildinformationen, Anweisungen zum Anzeigen von Begrüßungen und Anweisungen zum Anzeigen von Richtlinien für einen Benutzer zum Präsentieren eines zu scannenden Bildes unter dem transparenten Scanfenster umfassen.

4. Vorrichtung nach Anspruch 1, wobei die elektronische Anzeige eine TOLED (transparente organische Leuchtdiode) ist.

5. Vorrichtung nach Anspruch 4, wobei die TOLED eine Außenfläche aufweist, die in transparentem Kunststoff eingefasst ist.

6. Vorrichtung nach Anspruch 1, wobei die Kommunikationsverbindung zwischen dem Bilddecoder und der elektronischen Anzeige drahtlos ist.

7. Vorrichtung nach Anspruch 1, wobei die Kommunikationsverbindung zwischen dem Bilddecoder und der elektronischen Anzeige eine festverdrahtete Verbindung ist.

8. Vorrichtung nach Anspruch 1, wobei der Bilddecoder innerhalb des unteren Abschnitts des Gehäuses positioniert ist.

9. Vorrichtung nach Anspruch 1, wobei der Bilddecoder außerhalb der Bildvorrichtung positioniert ist.

10. Vorrichtung nach Anspruch 1, wobei das am transparenten Scanfenster präsentierte Bild ein Barcode ist; und wobei der Bilddecoder ein Barcodedecoder ist.

11. Vorrichtung nach Anspruch 9, wobei ein Barcode dem transparenten Fenster zum Scannen auf einer elektronischen Vorrichtung präsentiert wird.

12. Vorrichtung nach Anspruch 1, wobei die elektronische Anzeige konfiguriert ist, um ein Firmenlogo auf der elektronischen Anzeige anzuzeigen.

13. Verfahren, umfassend:
Platzieren eines zu scannenden Bildes unter einem transparenten Scanfenster einer Vorrichtung, wobei die Vorrichtung ein Gehäuse umfasst, wobei das Gehäuse einen unteren Abschnitt, einen oberen Abschnitt und einen Endabschnitt aufweist, sich der obere Abschnitt in einem abnehmenden Winkel vom unteren Abschnitt erstreckt, sich der Endabschnitt in einem abnehmenden Winkel vom oberen Abschnitt erstreckt, und ein optisches System, wobei das optische System eine Kamera im unteren Abschnitt des Gehäuses umfasst, einen Spiegel, der an einer oberen Oberfläche innerhalb des oberen Abschnitts des Gehäuses positioniert ist, ein transparentes Scanfenster, das an einem unteren Ende des Endabschnitts positioniert ist, und ein transparentes Sichtfenster auf einer oberen Oberfläche des Endabschnitts, wobei der Spiegel so positioniert ist, dass ein vom transparenten Scanfenster auf den Spiegel einfallendes Licht im Sichtfeld der Kamera ist; und wobei das transparente Betrachtungsfenster eine elektronische Anzeige aufweist und auf dem Gehäuse über dem transparenten Scanfenster positioniert ist, sodass Bilder, die in dem transparenten Scanfenster präsentiert werden, von einem Präsentator im transparenten Sichtfenster gesehen werden können;
Bestimmen, dass das Bild korrekt unter dem transparenten Scanfenster platziert ist, indem das Bild durch das transparente Anzeigefenster betrachtet wird;
Scannen der Reflexion des Bildes im Spiegel mit der Kamera;
Decodieren des gescannten Bildes mit einem Bilddecodierer, der kommunikativ mit der Kamera und der elektronischen Anzeige verbunden ist;
Senden der decodierten Bildinformationen an die elektronische Anzeige; und
Anzeigen der decodierten Bildinformationen auf der elektronischen Anzeige.

14. Verfahren nach Anspruch 13, ferner umfassend den Schritt des Anzeigens einer Begrüßung auf der elektronischen Anzeige vor dem Platzierungsschritt.

15. Verfahren nach Anspruch 14, wobei der Schritt des Anzeigens einer Begrüßung das Anweisen eines Präsentators des zu scannenden Bildes einschließt, wo das zu scannende Bild platziert werden soll.

## Revendications

1. Dispositif comprenant :
un boîtier comportant une partie inférieure, une partie supérieure et une partie d'extrémité ;
une caméra ;
une fenêtre transparente destinée au balayage ;
une fenêtre transparente destinée à la visualisation, la fenêtre transparente destinée à la visualisation comportant un affichage électronique intégré dans celle-ci ;
un décodeur d'image, le décodeur d'image étant lié en communication à la caméra et à l'affichage électronique ;
la caméra étant configurée pour balayer des images présentées au niveau de la fenêtre transparente destinée au balayage par un utilisateur et pour envoyer les images balayées au décodeur d'image ;
le décodeur d'image étant configuré pour décoder les images balayées et pour envoyer les informations d'images décodées à l'affichage électronique ; et
l'affichage électronique étant configuré pour afficher les informations d'images décodées sur la fenêtre transparente destinée à la visualisation ;
**caractérisé par** :
le boîtier comportant la partie supérieure s'étendant à un angle déclinant à partir de la partie inférieure et la partie d'extrémité s'étendant à un angle déclinant à partir de la partie supérieure ;
la fenêtre transparente destinée au balayage étant positionnée sur une extrémité inférieure de la partie d'extrémité du boîtier ;
la caméra étant positionnée dans la partie inférieure du boîtier ;
la fenêtre transparente destinée à la visualisation étant positionnée sur une surface supérieure de la partie d'extrémité du boîtier et positionnée au-dessus de la fenêtre transparente destinée au balayage, de telle sorte qu'au moins une partie de la zone sous la fenêtre transparente destinée au balayage soit visible dans la fenêtre transparente destinée à la visualisation ; et
un miroir étant positionné sur une surface supérieure à l'intérieur de la partie supérieure du boîtier, de telle sorte qu'une lumière incidente sur le miroir à partir de la fenêtre transparente de balayage soit réfléchie dans le champ de vision de la caméra.

2. Dispositif selon la revendication 1, comprenant en outre un processeur lié en communication à la caméra, au décodeur d'image et à l'affichage électronique ; le processeur étant configuré pour mettre en oeuvre les fonctions de la caméra, du décodeur d'image et pour envoyer des instructions d'affichage à l'affichage électronique.

3. Dispositif selon la revendication 2, dans lequel les instructions d'affichage comprennent des instructions permettant d'afficher des informations d'image décodées, des instructions permettant d'afficher des messages d'accueil et des instructions permettant d'afficher des directives à un utilisateur pour présenter une image à balayer sous la fenêtre transparente de balayage.

4. Dispositif selon la revendication 1, dans lequel l'affichage électronique est une TOLED (diode électroluminescente organique transparente).

5. Dispositif selon la revendication 4, dans lequel la TOLED comporte une surface extérieure enveloppée dans un plastique transparent.

6. Dispositif selon la revendication 1, dans lequel la liaison de communication entre le décodeur d'image et l'affichage électronique est sans fil.

7. Dispositif selon la revendication 1, dans lequel la liaison de communication entre le décodeur d'image et l'affichage électronique est une liaison câblée.

8. Dispositif selon la revendication 1, dans lequel le décodeur d'image est positionné dans la partie inférieure du boîtier.

9. Dispositif selon la revendication 1, dans lequel le décodeur d'image est positionné à l'extérieur du dispositif d'image.

10. Dispositif selon la revendication 1, dans lequel l'image présentée dans la fenêtre transparente de balayage est un code à barres ; et dans lequel le décodeur d'image est un décodeur de code à barres.

11. Dispositif selon la revendication 9, dans lequel un code à barres est présenté à la fenêtre transparente destinée au balayage sur un dispositif électronique.

12. Dispositif selon la revendication 1, dans lequel l'affichage électronique est configuré pour afficher un logo d'entreprise sur l'affichage électronique.

13. Procédé comprenant :
le placement d'une image à balayer sous une fenêtre transparente de balayage d'un dispositif, le dispositif comprenant un boîtier, le boîtier comportant une partie inférieure, une partie supérieure et une partie d'extrémité, la partie supérieure s'étendant à un angle déclinant à partir de la partie inférieure, la partie d'extrémité s'étendant à un angle déclinant à partir de la partie supérieure et un système optique, le système optique comprenant une caméra dans la partie inférieure du boîtier, un miroir positionné sur une surface supérieure à l'intérieur de la partie supérieure du boîtier, une fenêtre transparente de balayage positionnée sur une extrémité inférieure de la partie d'extrémité et une fenêtre transparente de visualisation sur une surface supérieure de la partie d'extrémité, dans lequel le miroir est positionné de telle sorte que la lumière incidente sur le miroir provenant de la fenêtre transparente de balayage se trouve dans le champ de vision de la caméra et dans lequel la fenêtre transparente de visualisation comporte un affichage électronique et est positionnée sur le boîtier au-dessus de la fenêtre transparente de balayage, de telle sorte que des images présentées dans la fenêtre transparente de balayage puissent être vues par un présentateur dans la fenêtre transparente de visualisation ;
la détermination que l'image est placée correctement sous la fenêtre transparente de balayage par visualisation de l'image à travers la fenêtre transparente de visualisation ;
le balayage du reflet de l'image dans le miroir à l'aide de la caméra ;
le décodage de l'image balayée à l'aide d'un décodeur d'image lié en communication à la caméra et à l'affichage électronique ;
l'envoi des informations d'image décodées à l'affichage électronique ; et
l'affichage des informations d'image décodées sur l'affichage électronique.

14. Procédé selon la revendication 13, comprenant en outre l'étape d'affichage d'un message d'accueil sur l'affichage électronique avant l'étape de placement.

15. Procédé selon la revendication 14, dans lequel l'étape d'affichage d'un message d'accueil comprend le fait de donner l'instruction, à un présentateur de l'image à balayer, de l'endroit où placer l'image à balayer.
